# EUROPÄISCHE PATENTSCHRIFT

(11) **EP 3 881 670 B1**
(45) Veröffentlichungstag und Bekanntmachung des Hinweises auf die Patenterteilung: **10.08.2022**
(21) Anmeldenummer: 20164564.5
(22) Anmeldetag: 20.03.2020
(51) Int. Cl.: A01D 78/10

(54) **HEUWERBUNGSMASCHINE**
HAY-MAKING MACHINE
MACHINE DE FENAISON

(43) Veröffentlichungstag der Anmeldung: 22.09.2021
(73) Patentinhaber: Kverneland Group Kerteminde A/S, 5300 Kerteminde (DK)
(72) Erfinder: Lamprecht, Tobias, 78244 Gottmadingen (DE); Hirt, Christian, 78244 Gottmadingen (DE); Ritter, Markus, 78244 Gottmadingen (DE)
(74) Vertreter: Grünecker Patent- und Rechtsanwälte PartG mbB

(56) Entgegenhaltungen:
- DE-A1- 2 428 144
- DE-A1- 2 728 732
- DE-A1- 2 919 241

## Beschreibung

Die Erfindung betrifft eine Frontanbau-Heuwerbungsmaschine gemäß Oberbegriff des Patentanspruchs 1.

Die aus DE 24 281 44 A1 bekannte Heuwerbungsmaschine mit einer Arbeitsbreite von 4,20 m ist für Heckanbau konzipiert. Die gegensinnig angetriebenen Kreisel bilden einen Mittelschwad.

Die aus DE 27 287 32 A1 bekannte Heuwerbungsmaschine ist im Heckanbau gezeigt und beschrieben. Beschrieben wird auch ein Frontanbau der Heuwerbungsmaschine, wobei dann die gegensinnigen Drehrichtungen der sich in der Mitte überlappenden beiden Rechkreisel gegenüber den gezeigten Drehrichtungen umgekehrt sind. Die Drehrichtungen verlaufen dann beim Frontanbau in Fahrtrichtung vorn nach innen, sodass zwischen den Schlepperrädern ein einzelner Mittelschwad gebildet wird.

Bei der aus DE 2 919 241 A bekannten Frontanbau-Heuwerbungsmaschine zum Freiräumen der Schlepperspur werden die beiden quer zur Fahrtrichtung mit einem Zwischenabstand nebeneinanderliegenden Kreisel entweder gegensinnig so angetrieben, dass ihre Drehrichtungen vorne nach innen gerichtet sind, oder gleichsinnig, und zwar um entweder nur einen Mittelschwad oder einen Mittelschwad und einen Seitenschwad zu bilden. Der Querträger des Tragrahmens kann bei gleichsinnig angetriebenen Kreiseln schräggestellt werden, um einen einzelnen Seitenschwad zu bilden. Der Aufbau der Frontanbau-Heuwerbungsmaschine ist unter anderem wegen der verschiedenen Umstellmöglichkeiten aufwendig und schadenanfällig.

Die aus DE 2 513 297 A bekannte Heuwerbungsmaschine ist für wahlweisen Frontanbau oder Heckanbau am Schlepper ausgelegt. Im Frontanbau sind die Zinkenumlaufbahnen der beiden gegensinnig und vorne nach innen drehangetriebenen, quer zur Fahrtrichtung nebeneinanderliegenden Kreisel beabstandet, um zwischen den Schlepper-Rädern einen Mittelschwad zu bilden. Im Heckanbau kann eine Überlappung zwischen den Zinkenumlaufbahnen eingestellt werden, sodass die Heuwerbungsmaschine als Streuer für das von den Schlepper-Rädern überfahrene Erntegut arbeitet, jedoch keinen Schwad bildet. Der Aufbau der Heuwerbungsmaschine ist wegen der diversen Umstellmöglichkeiten aufwendig und störungsanfällig.

Der Erfindung liegt die Aufgabe zugrunde, eine baulich einfache und störungsunanfällig handhabbare Frontanbau-Heuwerbungsmaschine anzugeben, die die Schlepperspur/Spurweite mit zwei Seitenschwaden zuverlässig freiräumt.

Die gestellte Aufgabe wird mit den Merkmalen des Patentanspruchs 1 gelöst.

Dank der Überlappung der quer zur Fahrtrichtung nebeneinander angeordneten äußeren Zinkenumlaufbahnen in der Mitte der Frontanbau-Heuwerbungsmaschine und den im vorne liegenden Arbeitsbereich nach außen gerichteten Drehrichtungen der Kreisel, wird die Schlepperspur/Spurweite zuverlässig freigeräumt und werden zwei Seitenschwaden außerhalb der Schlepperspur gebildet, sodass das Erntegut intensiv gemischt und geordnet abgelegt wird und, vorzugsweise, von einer größeren Heckanbau-Heuwerbungsmaschine des Schleppers untergemischt und dadurch nochmals gelockert wird. Dank der sauber freigeräumten Schlepperspur/Spurweite braucht die geschleppte Heuwerbungsmaschine nicht aggressiv angestellt zu werden, um auch das durch die Schlepper-Räder auf oder in den Boden gepresste Erntegut zuverlässig aufnehmen zu können, sodass das Erntegut schonend und ohne Verschmutzung bearbeitet wird. Weiterhin wird sichergestellt, dass in Kombination mit einer Heckanbau-Heuwerbungsmaschine, welche einen Mittelschwad bildet, das Erntegut im gesamten Arbeitsbereich dieser Maschine bewegt und für eine gleichmäßige Trocknung durchmischt wird. Bei Maschinen in herkömmlicher Bauart wird der Bereich zwischen den Rotoren, in welchem der Schwad gebildet wird, bedingt durch die Arbeitsweise dieser Maschinen, nicht bearbeitet. Das in diesem Bereich am Boden liegende Erntegut wird lediglich zugedeckt jedoch nicht durchmischt. Eine gleichmäßige Trocknung findet bei herkömmlicher Arbeitsweise somit nicht statt, was die Qualität des Ernteguts negativ beeinträchtigt. Der Aufbau der Frontanbau-Heuwerbungsmaschine ist einfach, sie lässt sich bequem handhaben und arbeitet zuverlässig.

Es werden mindestens die Reifenspuren oder wird zweckmäßiger mehr als die gesamte Weite zwischen den Reifenaußenseiten der Schlepperachse mit der größten Spurweite freigeräumt.

Zweckmäßig beträgt die Überlappung der äußeren Zinkenumlaufbahnen zwischen etwa 1/8 bis 1/3, vorzugsweise etwa 22 %, des Umlaufbahn-Durchmessers. Dank der Überlappung wird die Schlepperspur/Spurweite vollständig freigeräumt und können relativ großdurchmessrige, effizient arbeitende Kreisel verwendet werden, und trotzdem die Transportbreiten-Vorschriften einhalten.

Die Zinken können gerade Arbeits-Enden aufweisen, die im vorne liegenden Arbeitsbereich unter einem Winkel von etwa 15° bis 35°, vorzugsweise etwa 30°, gegenüber der Arbeitsebene schräggestellt sind. Diese relativ flache Zinkenanstellung sichert einerseits eine zuverlässige Aufnahme des Ernteguts und andererseits dessen sehr schonende Bearbeitung in einem großen Arbeitsbereich.

Ebenfalls dank der Überlappung und der relativ großen Kreisel brauchen die zueinander zumindest im Wesentlichen parallelen Kreiselachsen der beiden, vorzugsweise gleich großen, Kreisel jeweils oben nach vorne nur unter einem relativ kleinen Winkel von etwa 5° bis 15°, vorzugsweise 9°, gegenüber einer Senkrechten auf die Arbeitsebene angestellt zu sein. Daraus resultiert ein wenig aggressives Arbeitsverhalten der Frontanbau-Heuwerbungsmaschine und ein breiter Arbeitsbereich.

Ferner ist es zweckmäßig, wenn die Zinken gegenüber den im Wesentlichen radialen Zinkenarmen entgegen der Drehrichtung mit einem Winkel zwischen etwa 45° bis 60°, vorzugsweise etwa 55°, schräggestellt sind. Dadurch werden die Zinken mit ihren Zinkenenden geschleppt, was schonend für das Erntegut ist. Durch die nahezu tangentiale, geschleppte Anordnung der Federzinken wird außerdem ein Nachziehen des Futters in den bereits geräumten Arbeitsbereich vermieden.

Ferner wird ausgeschlossen, dass sich Zinken eines Kreisels zu weit an Zinken des anderen Kreisels nähern, wenn sie auf erhöhten Widerstand treffen und dank der schrägen Ausrichtung nachgeben.

Bei einer zweckmäßigen Ausführungsform sind die Zinkenarme der Kreisel nach außen unten abgeknickt oder abgebogen. Dies erhöht die Stabilität der Zinkenarme und ermöglicht die flache Anstellung der Zinken relativ zur Arbeitsebene.

Die Arbeitsbreite der Frontanbau-Heuwerbungsmaschine kann zwischen etwa 2,5 m bis 3,0 m betragen, und ist nur geringfügig breiter als das Maß zwischen den Räderaußenseiten des Schleppers.

Die Zinken können Doppelzinken mit annähernd parallelen und geraden, in Hochrichtung übereinanderliegenden und in etwa gleich langen Zinkenenden sein, die ein gutes Arbeitsverhalten für das Erntegut sicherstellen.

Der Tragrahmen kann einen sich in Fahrtrichtung verbreitenden, in einer Draufsicht etwa dreieckigen Kasten und am vorderen Ende einen senkrecht und quer zur Fahrtrichtung starr befestigten Tragbalken unveränderlicher Länge aufweisen. Dies resultiert in einem baulich einfachen und stabilen und kostengünstigen Aufbau der Frontanbau-Heuwerbungsmaschine.

Dabei können die Kreiselachsen mit dem Kasten des Tragrahmens z. B. einen Winkel von etwa 120° einschließen, sodass sich eine wünschenswert niedrige Bauhöhe der Kreisel realisieren lässt. Außerdem lässt sich der Überstand der Maschine vor dem Schlepper optimieren (Abstand Lenkradmitte zu Vorderende der Maschine).

In den Tragbalken-Enden können an Getriebestränge angeschlossene Getriebe und Drehlagerungen der Kreisel angeordnet sein, während etwa in der Tragbalken-Mitte ein Verteilergetriebe zu den Getriebesträngen und ein zentraler Gelenkwellenanschluss vorgesehen sind. Die Zapfwelle des Schleppers kann an dem Gelenkwellenanschluss angeschlossen werden.

Schließlich kann jeder Kreisel wenigstens ein Nachlauf-Tastrad aufweisen und beispielsweise mit sechs regelmäßig um die Kreiselachse verteilten Zinkenarmen bestückt sein.

Anhand der Zeichnung wird eine Ausführungsform des Erfindungsgegenstandes erläutert. Es zeigen:
- Fig. 1: eine Draufsicht auf eine Frontanbau-Heuwerbungsmaschine an einem Schlepper, und
- Fig. 2: eine Seitenansicht der Frontanbau-Heuwerbungsmaschine in Arbeitsstellung.

Wenn ein Schlepper auf dem Feld gemähtes Erntegut mit einer gezogenen Heuwerbungsmaschine bearbeitet, wird Erntegut von den Schlepper-Rädern entlang der Fahrspur auf und in den Boden gequetscht und verschmutzt, das selbst bei aggressiver Einstellung der gezogenen Heuwerbungsmaschine von dieser nur schwierig abgefördert werden kann. Durch das Quetschen und die Verschmutzungen wird die Qualität des Ernteguts unerwünscht verringert. Deshalb ist es bekannt, die Schlepperspur mit einer Frontanbau-Heuwerbungsmaschine freizuräumen, d. h., das Erntegut in einem oder zwei Seitenschwaden außerhalb der Schlepperspur zu fördern und/oder in einem Mittelschwad zwischen den Schlepper-Rädern zusammenzufassen. Des Weiteren ist bekannt, dass bei einer Heuwerbungsmaschine im Heckanbau, welche einen Mittelschwad bildet, das Erntegut im Bereich der Schwadbildung zwischen den Rotoren nicht durchmischt oder vom Boden abgehoben wird. Hierfür gibt es Lösungen welche in die heckangebaute Maschine integriert sind, um den Bereich zwischen den Rotoren hinter dem Schlepper freizuräumen. Nachteilig bei diesen Lösungen ist, dass durch den begrenzten Bauraum nur eine geringe Aushubhöhe im Vorgewende erreicht wird und das Erntegut weiterhin vom Schlepper überfahren wird. Weiterhin ist die integrierte Lösung nicht universell, sondern nur mit der jeweiligen Maschine einsetzbar. Die Frontanbau-Heuwerbungsmaschine erhöht hingegen die Qualität des mit einer gezogenen Heuwerbungsmaschine bearbeiteten Ernteguts, auch weil schon von der Frontanbau-Heuwerbungsmaschine verlagertes Erntegut von der nachfolgend arbeitenden gezogenen Heuwerbungsmaschine nochmals gründlich durchmischt bzw. zur Durchlüftung bearbeitet wird.

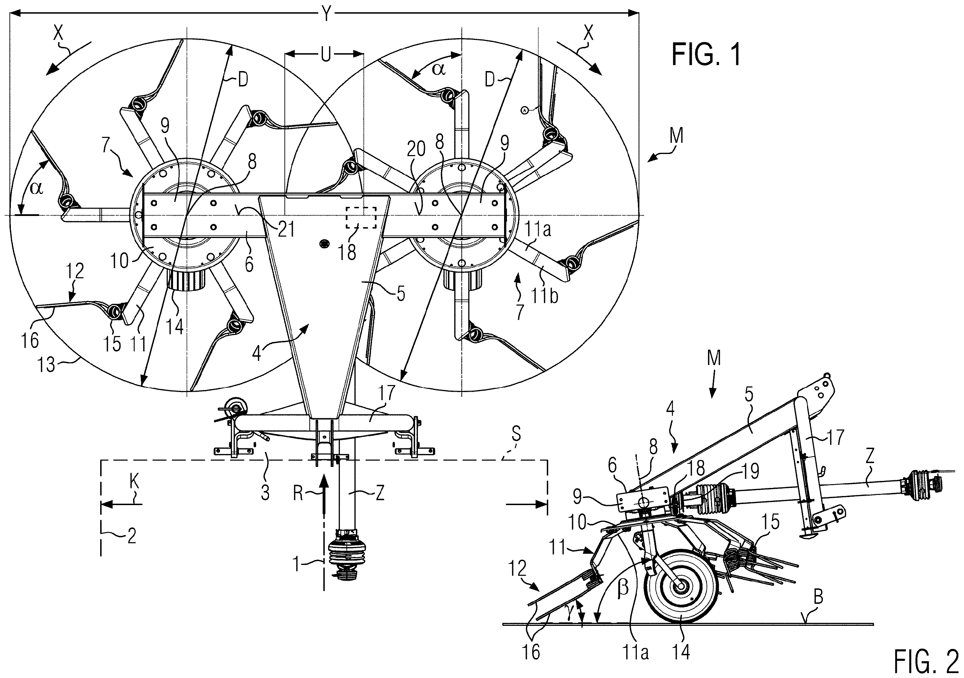

Die erfindungsgemäße, in den Fig. 1 und 2 gezeigte Frontanbau-Heuwerbungsmaschine M ist an einer Front-Anbauvorrichtung 3 eines Schleppers S angebracht, dessen Räderaußenkanten 2 eine bestimmte äußere Spurbreite K definieren. Die Längsmittelachse des Schleppers S ist mit 1 angedeutet, die Fahrtrichtung R in Fig. 1 nach vorn.

Ein Tragrahmen 4 der Frontanbau-Heuwerbungsmaschine M ist mit einem Gestell 17 am Schlepper verankert und weist hier einen sich in Fahrtrichtung R allmählich verbreiternden, in Draufsicht z. B. dreieckigen Kasten 5 auf, an dessen vorderem Ende ein quer zur Fahrtrichtung R orientierter Tragbalken 6 starr befestigt ist. Der Kasten 5 könnte eine andere Form haben, z. B. quadratisch oder rechteckig sein. Der Tragbalken 6 ist hohl, hat eine unveränderbare Länge und trägt an den Enden zwei in der gezeigten Ausführungsform gleich große Kreisel 7, die um ihre Kreiselachsen 8 gegensinnig drehantreibbar sind, und zwar derart, dass die Drehrichtung X jedes Kreisels in Fahrtrichtung R vorne nach außen gerichtet ist.

Im Tragbalken 6 sind Drehlagerungen und Getriebe 9 für die beiden Kreisel 7 untergebracht. Getriebestränge 20, 21 führen von einem in etwa mittigen Verteilergetriebe 18 zu den Getrieben der Kreisel 7. Am Verteilergetriebe 18 ist ein Gelenkwellenanschluss 19 vorgesehen, an welchem eine vom Schlepper S ausgehende Zapfwelle Z angeschlossen ist.

Jeder Kreisel 7 hat mehrere, an einer Platte 10 festgelegte, hier ungesteuerte Zinkenarme 11, die beispielsweise in Bezug auf die Kreiselachse 8 radial angeordnet sind. In der gezeigten Ausführungsform sind als nicht beschränkendes Beispiel sechs regelmäßig um die Kreiselachse 8 verteilte Zinkenarme 11 vorgesehen. Jeder Zinkenarm 11 ist (Fig. 2) nach außen unten abgeknickt oder abgebogen und trägt am äußeren Ende hier wenigstens einen Doppelzinken 12, der über eine Wendelanordnung 15 federnd mit dem Zinkenarm 11 verbunden ist. Der Doppelzinken 12 hat im Wesentlichen gerade und gleich lange Zinkenenden 16, die mit ihren äußeren Enden eine äußere Zinkenumlaufbahn 13 definieren.

Gemäß Fig. 2 sind die zumindest im Wesentlichen zueinander parallelen Kreiselachsen 8 relativ zu einer Senkrechten auf eine Arbeitsebene B (dem Boden) mit einem Winkel β angestellt, der zwischen etwa 5° bis etwa 15°, vorzugsweise etwa 9°, beträgt, und so, dass die Zinken 12 in Fahrtrichtung R vorne sich nahe an der Arbeitsebene B bewegen, in Fahrtrichtung R hinten liegend, hingegen deutlich von der Arbeitsebene B abgehoben sind. Jeder Doppelzinken 12 ist so am Zinkenarm 11 befestigt, dass er mit der Arbeitsebene B einen Winkel γ einschließt, der zwischen etwa 15° und 35° liegt, vorzugsweise etwa 30°, beträgt. Die in der gezeigten Ausführungsform abgeknickten Zinkenarme 11 haben einen relativ flach von der Scheibe 10 wegstrebenden Anfangsteil 11a, an den sich über einen Knick ein steiler zum Boden gerichteter Endteil 11b anschließt. Die Kreisel 7 sind jeweils über mindestens ein Bodentastrad 14 auf der Arbeitsebene B abgestützt, das als schwenkbares Nachlaufrad konzipiert sein kann. Der Kasten 5 des Tragrahmens 4 schließt beispielsweise mit den Kreiselachsen 8 einen Winkel von etwa 120° ein.

Gemäß Fig. 1 arbeiten die Doppelzinken 12 schleppend, da sie gegenüber den radialen Zinkenarmen 11 unter einem Winkel α entgegen der Drehrichtung X angestellt sind. Der Winkel α liegt zweckmäßig zwischen etwa 45° und 60°, und beträgt vorzugsweise etwa 55°.

Die äußeren Zinkenumlaufbahnen 13 haben einen Umlaufbahn-Durchmesser D und überlappen sich in der Mitte der Frontanbau-Heuwerbungsmaschine M mit einer Überlappung U, die z. B. zwischen etwa 1/8 bis 1/3, vorzugsweise etwa 22 % des Umlaufbahn-Durchmessers D beträgt. Dabei sind die Zinkenarme 11 und die Doppelzinken 12 der beiden Kreisel 7 so zueinander auf Lücke versetzt, dass sie beim Arbeiten nicht kollidieren. Die Frontanbau-Heuwerbungsmaschine hat eine Arbeitsbreite Y, die beispielsweise zwischen etwa 2,5 m bis etwa 3,0 m liegt, und geringfügig größer ist als die Räder-Außenseiten-Spurweite K des Schleppers, sodass das Erntegut in zwei nicht gezeigten Seitenschwaden beiderseits des Schleppers S abgelegt und die Schlepperspur/Spurweite freigeräumt wird.

Zur Transportfahrt und/oder am Vorgewende kann die Frontanbau-Heuwerbungsmaschine M über die Schlepperhydraulik ausgehoben werden. Bei einer konkreten Ausführungsform beträgt die Arbeitsbreite Y ca. 2,77 m, liegt der Umlaufbahn-Durchmesser D bei etwa 1,56 m und misst die Überlappung U etwa 0,35 m.

Es ist möglich, anstelle ungesteuerter Zinken gesteuerte Zinken zu verwenden, um die Arbeitsbereiche der Zinken zu optimieren. Auch könnten die Arbeitsenden 16 der Zinken 12 einen anderen Verlauf als den gezeigten geraden Verlauf haben, und könnten die Zinken 12 auch mit drei oder mehr Zinkenenden ausgebildet sein.

Die Drehzahl am Kreisel 7 kann zwischen 65 und etwa 100 rpm betragen und ist vom Schlepper S aus einstellbar.

## Patentansprüche

1. Frontanbau-Heuwerbungsmaschine (M), mit einem Tragrahmen (4), an welchem zumindest annähernd quer zur Fahrtrichtung (R) zwei gegensinnig um Kreiselachsen (8) drehantreibbare Kreisel (7) mit Zinkenarmen (11) und Zinken (12) nebeneinanderliegend angeordnet sind, wobei sich die äußeren Umlaufbahnen (13) der Zinken (12) in der Mitte gegenseitig überlappen, **dadurch gekennzeichnet, dass** zum Freiräumen der Schlepperspur/Spurweite (K) von Erntegut und Ablegen des Ernteguts in zwei Seitenschwade beiderseits des Schleppers (S) außerhalb der Schlepperspur die Kreisel-Drehrichtungen (X) in Fahrtrichtung (R) vorne nach außen gerichtet sind.

2. Heuwerbungsmaschine nach Anspruch 1, **dadurch gekennzeichnet, dass** die Überlappung (U) zwischen 1/8 bis 1/3, vorzugsweise 22 %, des Umlaufbahn-Durchmessers (D) beträgt.

3. Heuwerbungsmaschine nach wenigstens einem der vorhergehenden Ansprüche, **dadurch gekennzeichnet, dass** die Zinken (12) gerade Arbeits-Enden (16) aufweisen, die im vorne liegenden Arbeitsbereich unter einem Winkel (γ) von 15° bis 35°, vorzugsweise 30°, gegenüber der Arbeitsebene (B) schräggestellt sind.

4. Heuwerbungsmaschine nach wenigstens einem der vorhergehenden Ansprüche, **dadurch gekennzeichnet, dass** die zueinander zumindest im Wesentlichen parallelen Kreiselachsen (8) der beiden, vorzugsweise gleich großen, Kreisel (7) jeweils oben nach vorne unter einem Winkel (β) von nur 5° bis 15°, vorzugsweise etwa 9°, gegenüber einer Senkrechten auf die Arbeitsebene (B) angestellt sind.

5. Heuwerbungsmaschine nach wenigstens einem der vorhergehenden Ansprüche, **dadurch gekennzeichnet, dass** die Zinken (12) gegenüber im Wesentlichen radialen Zinkenarmen (11) der Kreisel (7) entgegen der Drehrichtung (X) mit einem Winkel (α) zwischen 45° bis 60° schräggestellt sind.

6. Heuwerbungsmaschine nach wenigstens einem der vorhergehenden Ansprüche, **dadurch gekennzeichnet, dass** die Zinkenarme (11) nach außen unten abgeknickt oder gebogen sind.

7. Heuwerbungsmaschine nach wenigstens einem der vorhergehenden Ansprüche, **dadurch gekennzeichnet, dass** die Arbeitsbreite (Y) der Heuwerbungsmaschine (M) zwischen 2,5 m bis 3,0 m beträgt.

8. Heuwerbungsmaschine nach wenigstens einem der vorhergehenden Ansprüche, **dadurch gekennzeichnet, dass** die Zinken (12) Doppelzinken mit annähernd parallelen und geraden, in Hochrichtung übereinanderliegenden und in etwa gleich langen Zinkenenden (16) sind.

9. Heuwerbungsmaschine nach wenigstens einem der vorhergehenden Ansprüche, **dadurch gekennzeichnet, dass** der Tragrahmen (4) einen am vorderen Ende quer zur Fahrtrichtung (R) starr befestigten Tragbalken (6) mit unveränderlicher Länge aufweist.

10. Heuwerbungsmaschine nach wenigstens einem der vorhergehenden Ansprüche, **dadurch gekennzeichnet, dass** die Kreiselachsen (8) mit einem Kasten (5) des Tragrahmens (4) einen Winkel von 120° einschließen.

11. Heuwerbungsmaschine nach wenigstens einem der vorhergehenden Ansprüche, **dadurch gekennzeichnet, dass** in den Tragbalken-Enden an Getriebestränge (20, 21) angeschlossene Getriebe und Drehlagerungen (9) der Kreisel (7) angeordnet sind, und dass in etwa in der Tragbalken-Mitte ein Verteilergetriebe (18) zu den Getriebesträngen (20, 21) und ein Gelenkwellenanschluss (19) vorgesehen sind.

12. Heuwerbungsmaschine nach wenigstens einem der vorhergehenden Ansprüche, **dadurch gekennzeichnet, dass** jeder Kreisel (7) wenigstens ein Nachlauf-Tastrad (14) und die regelmäßig um die Kreiselachse (8) verteilten Zinkenarme (11) aufweist.

13. Heuwerbungsmaschine nach wenigstens einem der vorhergehenden Ansprüche, **dadurch gekennzeichnet, dass** in den Tragbalken-Enden an Getriebestränge (20, 21) angeschlossene Getriebe und Drehlagerungen (9) der Kreisel (7) angeordnet sind, und dass die Kreisel (7) hydraulisch, mechanisch oder elektrisch angetrieben werden.

## Claims

1. Front-mounted hay-making machine (M), comprising a carrying frame (4) at which at least substantially crosswise to the driving direction (R), two rotors (7) having tine arms (11) and tines (12) are arranged side by side to be driven about their rotor axes (8) in opposite directions, wherein the outer orbits (13) of the tines (12) mutually overlap each other in the middle, **characterized in that** for clearing the tractor track/wheel track (K) of crop and depositing the crop in two side swaths at both sides of the tractor (S) outside of the tractor track the directions of rotation (X) of the rotors in driving direction (R) at the front are directed outwardly.

2. Hay-making machine according to claim 1, **characterized in that** the overlap (U) amounts to between 1/8 to 1/3, preferably 22%, of the diameter (D) of the orbit.

3. Hay-making machine according to at least one of the preceding claims, **characterized in that** the tines (12) have straight working ends (16) inclined in the frontward situated working region with an angle (γ) of 15° to 35°, preferably 30°, in relation to the working plane (B).

4. Hay-making machine according to at least one of the preceding claims, **characterized in that** the rotor axes (8) of both rotors (7), preferably having equal dimensions, are at least substantially parallel to each other, respectively are inclined on top forward with an angle (β) of only 5° to 15°, preferably about 9°, relative to a vertical line on the working plane (B).

5. Hay-making machine according to at least one of the preceding claims, **characterized in that** the tines (12) are inclined in relation to substantially radial tine arms (11) of the rotors (7) counter to the direction (X) of rotation with an angle (α) between 45° to 60°.

6. Hay-making machine according to at least one of the preceding claims, **characterized in that** the tine arms (11) are crooked or bent outwardly and downwardly.

7. Hay-making machine according to at least one of the preceding claims, **characterized in that** the working width (Y) of the hay-making machine (M) amounts to between 2.5 m to 3.0 m.

8. Hay-making machine according to at least one of the preceding claims, **characterized in that** the tines (12) are dual tines having straight tine ends (16) of substantially equal lengths, being substantially parallel and situated above another in height direction.

9. Hay-making machine according to at least one of the preceding claims, **characterized in that** the carrying frame (4) comprises a carrying beam (6) with fixed length oriented crosswise to the driving direction (R), the carrying beam being rigidly fixed at the front end of the carrying frame (4).

10. Hay-making machine according to at least one of the preceding claims, **characterized in that** the rotor axes (8) form an angle of 120° in relation to a box (5) of the carrying frame (4).

11. Hay-making machine according to at least one of the preceding claims, **characterized in that** gear mechanisms and rotational bearings (9) of the rotors (7) connected to gear chains (20, 21) are arranged in ends of the carrying beam (6), and that a distribution gear (18), extending to the gear chains (20, 21) and to a drive shaft connection (19), is situated approximately in the mid-part of the carrying beam (18).

12. Hay-making machine according to at least one of the preceding claims, **characterized in that** each rotor (7) has at least one caster wheel (14) and that the tine arms (11) are distributed regularly about the rotor axes (8).

13. Hay-making machine according to at least one of the preceding claims, **characterized in that** in the end of the carrying beam (6) gear mechanisms and rotational bearings (9) of the rotors (7) are arranged in connection with gear chains (20, 21), and that the rotors (7) are driven hydraulically, mechanically or electrically.

## Revendications

1. Machine de fenaison à montage frontal (M), comprenant un châssis porteur (4) sur lequel sont disposées côte à côte, au moins approximativement transversalement au sens de déplacement (R), deux gyroscopes (7) pouvant être entraînés en rotation en sens inverse autour des axes de gyroscope (8) et comportant des bras porte-dents (11) et des dents (12), les orbites extérieures (13) des dents (12) se chevauchant mutuellement au milieu, **caractérisée en ce que**, pour dégager la voie du tracteur/largeur de voie (K) du matériau récolté et déposer le matériau récolté en deux andains latéraux sur les deux côtés du tracteur (S) en dehors de la voie du tracteur, les sens de rotation des gyroscopes (X) sont dirigés vers l'extérieur dans le sens de déplacement (R).

2. Machine de fenaison selon la revendication 1, **caractérisée en ce que** le chevauchement (U) est compris entre 1/8 et 1/3, de préférence 22 %, du diamètre de l'orbite (D).

3. Machine de fenaison selon au moins l'une des revendications précédentes, **caractérisée en ce que** les dents (12) présentent des extrémités de travail (16) rectilignes qui, dans la zone de travail située à l'avant, sont inclinées selon un angle (γ) de 15° à 35°, de préférence de 30°, par rapport au plan de travail (B).

4. Machine de fenaison selon au moins l'une des revendications précédentes, **caractérisée en ce que** les axes de gyroscopes (8) des deux gyroscopes (7), qui sont au moins sensiblement parallèles entre eux, de préférence de même taille, sont respectivement inclinés vers le haut et vers l'avant selon un angle (β) de seulement 5° à 15°, de préférence d'environ 9°, par rapport à une perpendiculaire au plan de travail (B).

5. Machine de fenaison selon au moins l'une des revendications précédentes, **caractérisée en ce que** les dents (12) sont inclinées selon un angle (α) compris entre 45° et 60° par rapport aux bras porte-dents (11) sensiblement radiaux des gyroscopes (7), dans le sens inverse du sens de rotation (X).

6. Machine de fenaison selon au moins l'une des revendications précédentes, **caractérisée en ce que** les bras porte-dents (11) sont pliés ou courbés vers l'extérieur et vers le bas.

7. Machine de fenaison selon au moins l'une des revendications précédentes, **caractérisée en ce que** la largeur de travail (Y) de la machine de fenaison (M) est comprise entre 2,5 m et 3,0 m.

8. Machine de fenaison selon au moins l'une des revendications précédentes, **caractérisée en ce que** les dents (12) sont des dents doubles avec des extrémités de dents (16) approximativement parallèles et droites, superposées dans le sens de la hauteur et de longueurs approximativement égales.

9. Machine de fenaison selon au moins l'une des revendications précédentes, **caractérisée en ce que** le châssis porteur (4) comporte une poutre porteuse (6) de longueur invariable, fixée de manière rigide à l'extrémité avant, transversalement au sens de déplacement (R).

10. Machine de fenaison selon au moins l'une des revendications précédentes, **caractérisée en ce que** les axes des gyroscopes (8) forment un angle de 120° avec un caisson (5) du châssis porteur (4).

11. Machine de fenaison selon au moins l'une des revendications précédentes, **caractérisée en ce que** des engrenages et des paliers de rotation (9) des gyroscopes (7), raccordés à des trains d'engrenages (20, 21), sont disposés dans les extrémités de la poutre porteuse, et **en ce qu'**un engrenage de distribution (18) vers les trains d'engrenages (20, 21) et une liaison d'arbre de transmission (19) sont prévus approximativement au milieu de la poutre porteuse.

12. Machine de fenaison selon au moins l'une des revendications précédentes, **caractérisée en ce que** chaque gyroscope (7) comporte au moins une roue palpeuse suiveuse (14) et que les bras porte-dents (11) sont régulièrement répartis autour de l'axe de gyroscope (8).

13. Machine de fenaison selon au moins l'une des revendications précédentes, **caractérisée en ce que** des engrenages et des paliers de rotation (9) des gyroscopes (7), raccordés à des trains d'engrenages (20, 21), sont disposés dans les extrémités des poutres porteuses, et **en ce que** les gyroscopes (7) sont entraînés hydrauliquement, mécaniquement ou électriquement.
